# EUROPÄISCHE PATENTSCHRIFT

(11) **EP 0 552 801 B1**
(45) Veröffentlichungstag und Bekanntmachung des Hinweises auf die Patenterteilung: **31.05.1995**
(21) Anmeldenummer: 93100988.0
(22) Anmeldetag: 22.01.1993
(51) Int. Cl.: F16D 3/205

(54) **Rollenkupplung**
Roller coupling
Accouplement à rouleaux

(30) Priorität: 24.01.1992 DE 4201809; 02.09.1992 DE 4229251
(43) Veröffentlichungstag der Anmeldung: 28.07.1993
(73) Patentinhaber: J.M. Voith GmbH, D-89522 Heidenheim (DE)
(72) Erfinder: Lindenthal, Hans, W-7920 Heidenheim (DE)
(74) Vertreter: Weitzel, Wolfgang, Dr.-Ing.

(56) Entgegenhaltungen:
- DE-C- 840 637
- GB-A- 143 654
- GB-A- 2 099 549
- US-A- 1 821 215
- US-A- 3 392 548

## Beschreibung

Die Erfindung betrifft eine Rollenkupplung zum Übertragen eines Drehmomentes. Auf DE GM 88 16 516 wird verwiesen.

Rollenkupplungen werden häufig im Fahrzeugbau eingesetzt, beispielsweise bei Kraftfahrzeugen, und zwar häufig in Form von Tripodewellen. Sie haben dabei eine relativ große Distanz zu überbrücken, beispielsweise zwischen dem Getriebe und der Treibachse. Auch Höhenunterschiede und Lageveränderungen infolge wechselnder Nutzlast und infolge des Federspieles müssen ausgeglichen werden. Deswegen befinden sich an den Enden solcher Tripodewellen meistens Gelenke, im allgemeinen Kreuzgelenke. Schwierigkeiten ergeben sich vor allem dann, wenn die Drehmomente hoch sind, weil dann auch die Gelenkdurchmesser entsprechend groß sind.

In besonderen Fällen, beispielsweise beim Antrieb von Schienenfahrzeugen steht nur eine geringe Einbaulänge zur Verfügung. Ein typischer Anwendungsfall ist der Antrieb eines Radsatzes von einem querliegenden Fahrmotor aus. Dabei sind mehrere technische Anforderungen zu erfüllen: Vor allem muß ein hohes Drehmoment übertragen werden; sodann muß ein axialer Längenausgleich unter Last bewältigt werden; außerdem tritt eine Beugung der Welle auf, die durch die Gelenkwellen bewältigt wird.

Es wäre wünschenswert, alle diese Funktionen von einer einzigen Rollenkupplung ausführen zu lassen, d.h. ohne die am Ende befindlichen, beiden Gelenke.

Es gibt zwar Rollenkupplungen, die eine relativ große Beugung ausführen können. Hierbei haben die Führungsbahnen die Gestalt von Hohlzylinder-Schalen; die Rollkörper sind demgemäß kugelig. Nachteilig ist jedoch bei diesen bekannten Tripodewellen, daß die Herstellung schwierig und damit teuer ist. Bei der Herstellung der Führungsnabe mit den Führungsbahnen wird ein Härteprozeß vorgenommen. Dabei kommt es verhältnismäßig häufig zu Spannungsrissen, so daß die gesamte Führungsnabe weggeworfen werden muß. Dies erhöht die Herstellungskosten.

DE-PS 840 637 beschreibt ein Kreuzgelenk, das ebenfalls zwei Hauptteile aufweist, deren eines als Welle, und deren anderes als Hülse ausgebildet ist. Die beiden Hauptteile sind ebenfalls in Achsrichtung gegeneinander verschiebbar. Zum Erleichtern der Verschiebebewegung sind hierbei dem einen Hauptteil in dessen Achsrichtung angeordnete Zylinderstifte zugeordnet, und dem anderen Hauptteil feststehende Gleitsteine mit ebenen Gleitflächen.

Aus der GB-A 2 099 549 A ist eine Kreuzgelenkausführung, die Rollkörper mit Rollflächen aufweist, die in einem achssenkrechten Schnitt gesehen konkav gestaltet sind, bekannt. Die Rollkörper sind zwischen einem Tripodekörper und jeweils einem im Gehäuse beweglich gelagerten Ring mit komplementär zum Rollkörper gewölbter Anlagefläche angeordnet. Der Ring selbst ist innerhalb der im Gehäuse dafür vorgesehenen Aussparungen beweglich, diese dienen als Führungsbahnen für die Ringe. Diese Ausführung ermöglicht neben der Verschiebungsmöglichkeit der beiden Hauptteile in axialer Richtung, die winklige Stellung beider Hauptteile zueinander. Die Drehmomentübertragung erfolgt vom Tripodeelement über die Rollkörper, die jeweiligen Ringe auf das mit dem Gehäuse verbundene Element bzw. umgekehrt. Die zwischen Ring und Tripodeelement angeordneten Rollkörper rollen bei axialer Verschiebung des Ringes an Ring und Tripodeelement ab. Bei Schiefstellung der beiden Hauptteile werden die Rollkörper auch an den vom Tripodeelement gebildeten Laufflächen verschoben. Die Realisierung axialer Verschiebungen erfolgt durch Rollen und die Realisierung von Schiefstellungen erfolgt durch das Gleiten der Außenflächen des Ringes in den Aussparungen am Gehäuse. Diese Ausführung weist jedoch eine große Bauteilanzahl auf und erfordert einen enormen Fertigungs - und Bearbeitungsaufwand und eine hohen Grad an Fertigungsgenauigkeit, aufgrund der hohen Laufbahnanzahl. Ein weiterer wesentlicher Nachteil dieser Ausführung besteht darin, daß die Ausnehmungen zur Aufnahme der Ringe sich über die gesamte Länge des Gehäuses erstrecken. Bei größeren Schiefstellungen besteht die Möglichkeit, daß der Rollkörper nicht mehr vollständig am Tripodeelement anliegt sondern frei übersteht. Die Kraftübertragung erfolgt dann nicht mehr über die gesamte Ausdehnung des Rollkörpers sondern nur noch über einen Teil der Fläche, die bei Nichtschiefstellung der beiden Hauptteile ansonsten zur Übertragung genutzt werden.

Desweiteren ist die generelle Voraussetzung für eine einwandfreihe Kraftübertragung und ein Abrollen der Rollkörper bei einer derartigen Ausführung ein sehr hoher Grad an Fertigungsgenauigkeit.

Die US-A-1821215 offenbart eine Ausgleichskupplung zur Übertragung von Drehmomenten bei winkligem Versatz zwischen An- und Abtriebsseite. Der Ausgleich erfolgt mittels verschiebbarer kugelförmiger Elemente, wobei die kugelförmigen Elemente auf einem zylindrischen Körper angeordnet sind, der beide Kupplungshälften miteinander verbindet. Die miteinander zu verkuppelnden Wellenenden sind jeweils mit einer Nabe verbunden, die gewölbt ausgeführte Ausnehmungen aufweist, deren Fläche komplementär zum kugelförmigen Element ausgebildet ist. Der Ausgleich erfolgt bei Schiefstellung der Wellenenden zueinander durch Verschiebung des kugelförmigen Elementes auf dem zylindrischen Körper und durch Verschiebung der durch die Ausnehmungen an der Nabe beschriebenen Flächen gegenüber dem kugelförmigen Element. Der Ausgleich von Lagedifferenzen erfolgt hier durch Gleitbewegungen, weshalb eine derartige Ausführung hohem Verschleiß unterworfen ist und deshalb für sich ständig ändernde Lagedifferenzen und lange Längenausgleiche nicht geeignet ist.

Der Erfindung liegt die Aufgabe zugrunde, eine Rollenkupplung gemäß dem Oberbegriff von Anspruch 1 derart zu gestalten, daß hohe Drehmomente übertragen werden können, daß hohe Beugungswinkel aufgenommen werden können, daß große Längenausgleiche vorgenommen werden können, und daß die Herstellungskosten auch bei geringen Stückzahlen niedrig sind. Diese Aufgabe wird durch die kennzeichnenden Merkmale von Anspruch 1 gelöst.

Hierdurch wird im einzelnen folgendes erreicht: Die aufeinander abrollenden Flächen - nämlich einerseits die Rollflächen der Rollkörper und andererseits die Führungsbahnen - liegen beim Betrieb satt aneinander an. Deswegen sind hohe Drehmomente übertragbar. Aufgrund der besonderen Gestaltung kann die Rollenkupplung auch um einen ganz erheblichen Winkel gebeugt werden. Die konvexen Führungsbahnen lassen sich durch Drehen leicht herstellen, insbesondere dann, wenn sie als Einsatzteile getrennt von der Führungsnabe hergestellt und in diese eingesetzt werden.

Im Gegensatz zur obengenannten Druckschrift DE-PS 840 637 schmiegen sich die Laufflächen der Rollkörper und die Führungsbahnen der zylindrischen Körper flächig aneinander an. Es findet somit eine satte Führung statt, mit allen sich hieraus ergebenden Vorteilen. Ferner sind die Rollkörper gemäß der Erfindung um ihre eigene Achse drehbar gelagert. In der Praxis führt dies zu einer geringfügig oszillierenden, ständigen Verdrehung des einzelnen Rollkörpers um seine Achse, so daß kein örtlich begrenzter, hoher Verschleiß auftritt, sondern jedes Flächenelement der Lauffläche des einzelnen Rollkörpers nach und nach trägt. Das Kreuzgelenk gemäß jener Entgegenhaltung ist somit mit der Erfindung nicht vergleichbar.

Bildet man die Führungsbahnen der Führungsnabe aus zylindrischen Stäben, so lassen sich diese bei der ersten Montage in einer bestimmten Position einbauen, und nach einer gewissen Betriebsdauer um ihre eigene Längsachse verdrehen, so daß ein unverschlissener Abschnitt der Mantelfläche der zylindrischen Stäbe die Führungsbahn bildet. Außerdem läßt sich ein solcher Stab natürlich auch nach einer gewissen Zeit ganz austauschen gegen einen neuen Stab. Auch lassen sich die miteinander zusammenarbeitenden Flächen, nämlich die Führungsbahnen einerseits und die Rollflächen andererseits auf ein- und derselben Maschine herstellen.

Aufgrund der zylindrischen Gestalt wird außerdem eine gleichmäßige Lasteinleitung erzielt.

Ganz entscheidend ist natürlich, daß durch den hohen, möglichen Beugungswinkel der Rollenkupplung bei zahlreichen Anwendungsfällen auf Gelenke völlig verzichtet werden kann. Dies führt zu fundamentalen Kosteneinsparungen.

Eine besonders vorteilhafte Ausführungsform besteht darin, jeden einzelnen der zylindrischen Körper zwischen zwei ihm benachbarten Rollkörpern führend einzuspannen. Hierdurch läßt sich folgendes erreichen: Bei sämtlichen Betriebszuständen von Vollast bis Lastfreiheit herrscht Spielfreiheit. Die Anordnung ist außerdem selbsteinstellend. Bei Aufbringen eines Drehmomentes wird der einzelne zylindrische Körper von zwei einander im wesentlichen gegenüberliegenden Seiten beaufschlagt, so daß ein Kräfteausgleich stattfindet. Die gesamte Lauffläche der einzelnen Rolle sowie die gesamte Mantelfläche des einzelnen zylindrischen Körpers wird bei der Arbeit dieser Rollenkupplung ausgenutzt. Die Rolle dreht sich, wie oben erwähnt, während des Betriebes oszillierend langsam um ihre eigene Achse, und der Zylinder läßt sich nach einer gewissen Zeitspanne ebenfalls verdrehen, so daß neue Laufflächen-Elemente der zylindrischen Körper zum Tragen gebracht werden können. Die zylindrischen Körper sind um ihre eigene Achse frei verdrehbar zu lagern, so daß sie während des Betriebes in gleicher Weise eine oszillierende Drehbewegung um ihre eigene Längsachse ausführen, wie die Rollkörper.

Ein besonders interessanter Gedanke besteht auch darin, den Krümmungsradius der einzelnen Rollkörper-Lauffläche größer zu wählen, als den Krümmungsradius der Mantelflache des einzelnen zylindrischen Körpers; Gleichzeitig wird der einzelne Rollkörper in Bezug auf das ihn tragende Hauptteil radial begrenzt verschiebbar gemacht. Hierdurch läßt sich ein noch größeres Verschränken zwischen den beiden Hauptteilen der Rollenkupplungen erzielen, als ohnehin schon möglich. Ganz entscheidend dürfte aber sein, daß sich hierdurch die Notwendigkeit eines sphärischen Lagers des Rollkörpers vermeiden läßt, so daß die Konstruktion kostengünstiger wird.

Die zylindrischen Körper können massiv sein. Sie können aber auch als Hülsen ausgeführt sein, so daß sich das Gewicht der Rollenkupplung verringert.

Die Erfindung ist anhand der Zeichnung näher erläutert. Darin ist im einzelnen folgendes dargestellt:
Figur 1 zeigt eine Tripodewelle in perspektivischer Explosionsdarstellung.
Figur 2 zeigt die wesentlichen Teile einer Tripodewelle in perspektivischer Darstellung.
Figur 3 zeigt eine besonders interessante Variante mit zwischen zwei Rollen eingespannten Führungskörpern.
Figur 4 stellt eine wichtige Einzelheit einer Tripodewelle dar, und zwar den konkaven Rollkörper mit Lagerung auf seinem Trägerzapfen im Eingriff mit dem zylindrischen Führungskörper.

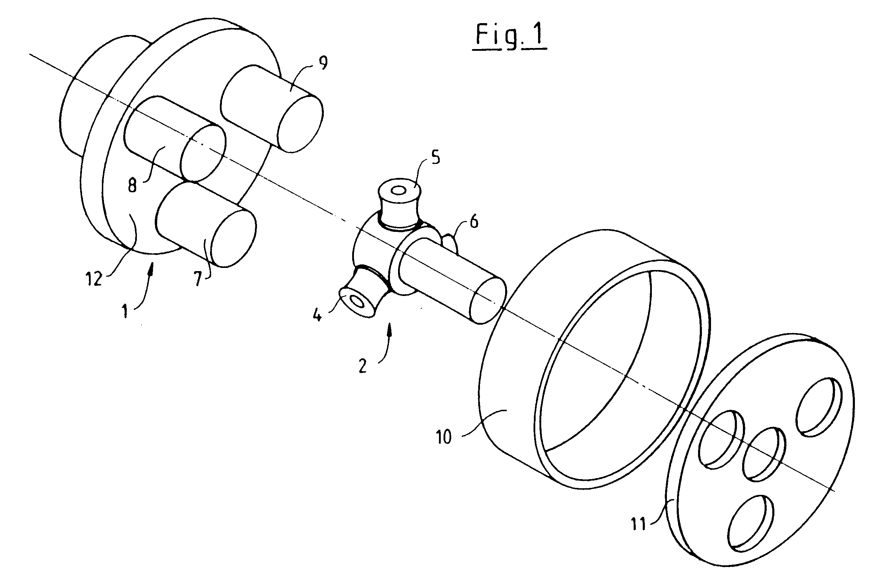

Die in Figur 1 dargestellte Tripodewelle weist zwei Hauptteile auf, die ineinander steckbar sind, nämlich eine Führungsnabe 1 und eine Führungswelle 2. Die Führungswelle 2 weist drei Rollkörper 4, 5, 6 auf. Diese arbeiten nach dem Zusammenstecken von Führungsnabe 1 und Führungswelle 2 mit Rollstäben 7, 8, 9 in folgender Weise zusammen: Wie man erkennt, sind die Umfangsflächen der Rollkörper 4, 5, 6 konkav ausgebildet. Da die Rollstäbe 7, 8, 9 zylindrisch und somit konvex ausgebildet sind, liegen die beiden Flächen, nämlich die konkaven Flächen der Rollkörper 4, 5, 6 an den konvexen Flächen der Rollstäbe 7, 8, 9 satt an. Sowohl die Rollkörper 4, 5, 6 als auch die Rollstäbe 7, 8, 9 sind um ihre eigenen Achsen verdrehbar.

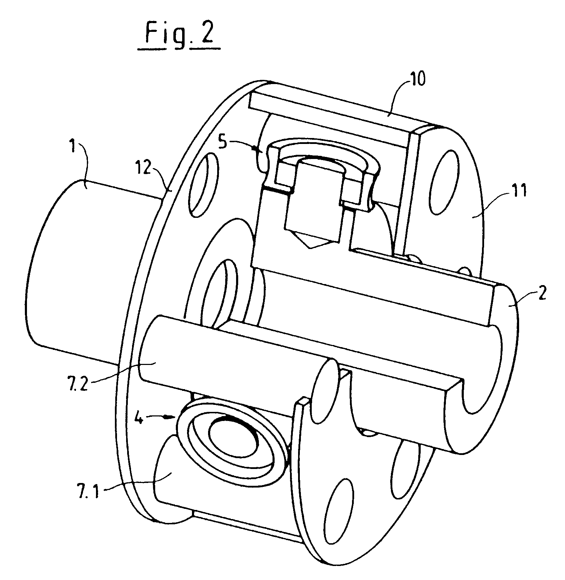

In Figur 2 erkennt man ferner eine Hülse 10 sowie einen Deckel 11, die beim Zusammenbau mit einem kreisscheibenförmigen Bund 12 der Führungsnabe 1 einen Käfig bilden, in welchem die entscheidenden Teile der Tripodewelle, nämlich die Rollkörper 4, 5, 6 und die Rollstäbe 7, 8, 9 eingeschlossen sind.

Bei der Ausführungsform gemäß Figur 1 sind genausoviel Rollkörper wie Rollstäbe vorgesehen, nämlich jeweils drei dieser Elemente.

Daß dies auch anders sein kann, zeigt Figur 2. Hier sind wiederum drei Rollkörper vorgesehen, von denen nur die Rollkörper 4 und 5 erkennbar sind. Jedem dieser Rollkörper ist jedoch ein paar von Rollstäben zugeordnet, siehe beispielsweise die Rollstäbe 7.1 und 7.2, die dem Rollkörper 4 zugeordnet sind. Die konkave Fläche eines jeden Rollkörpers ist somit geführt von den zylindrischen Flächen zweier Rollstäbe.

Im übrigen erkennt man auch hier wiederum entsprechende Elemente wie bei der Ausführungsform gemäß Figur 1, nämlich Welle 1, Nabe 2, Hülse 10, Deckel 11 und Kreisscheibe 12.

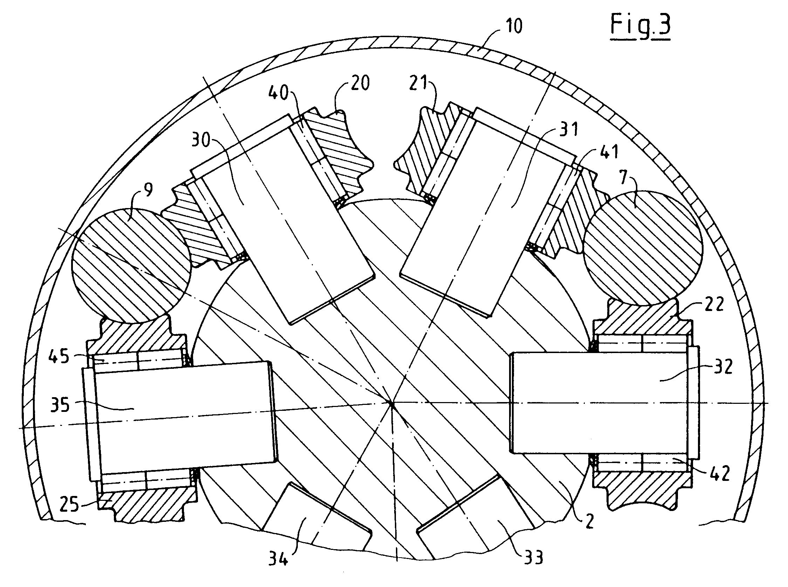

Die in Figur 3 gezeigte Ausführungsform ist in einem Querschnitt senkrecht zu den Achsen der beiden Hauptteile veranschaulicht. Dabei weist das eine Hauptteil eine Abtriebswelle 2 auf, das eine Reihe von Rollen trägt, hier insgesamt sechs Rollen 20 - 25. Vom anderen Hauptteil erkennt man hier lediglich eine Hülse 10 - analog zur Hülse 10 in den Figuren 1 und 2 - ferner drei zylindrische Stäbe 7, 8 und 9.

Die Rollkörper 20 - 25 sind jeweils von Radialstiften 30-35 getragen, und zwar unter Zwischenfügung von Nadellagern 40 - 45. Ganz entscheidend ist, daß die zylindrischen Körper jeweils zwischen zwei benachbarten Rollkörpern eingespannt sind, und zwar derart, daß die Mantelflächen der zylindrischen Körper an den konkaven Laufflächen der Rollkörper satt anliegen. Man beachte beispielsweise den zylindrischen Körper 7, der beidseits begrenzt ist von den Rollkörpern 21 und 22. Diese beiden Rollkörper spannen den zylindrischen Körper ein, derart, daß die Laufflächen der Rollkörper die Mantelfläche des zylindrischen Körpers führen.

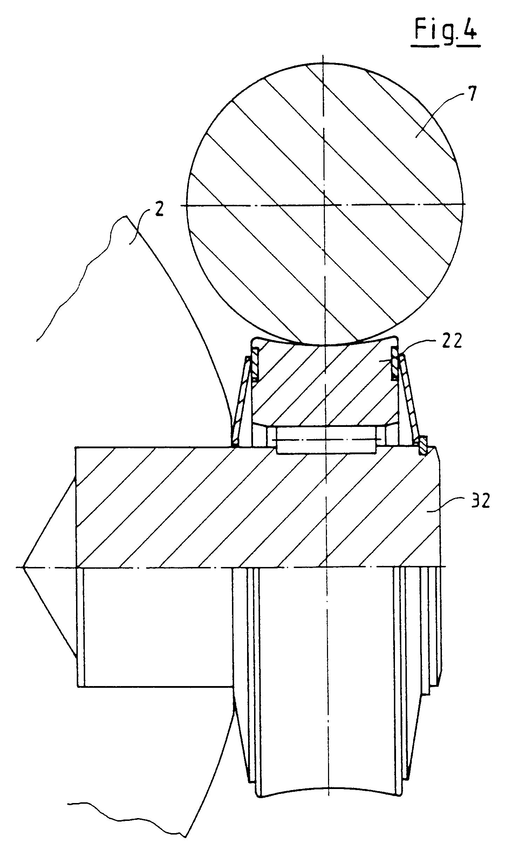

Bei der Ausführungsform gemäß Figur 4 sieht man einen Ausschnitt aus der Ausführungsform gemäß Figur 3 in vergrößerter Darstellung. Man erkennt den zylindrischen Körper 7 sowie den Rollkörper 22. Der andere der beiden benachbarten Rollkörper, nämlich der Rollkörper 21 ist der Einfachheit halber weggelassen. Ganz entscheidend ist hierbei, daß die konkave Lauffläche des Rollkörpers 22 einen größeren Krümmungsradius aufweist, als der Radius des Querschnittes des zylindrischen Körpers 7. Es findet somit zwar immer noch eine flächige Berührung statt, jedoch in geringerem Maße, so daß eine größere Schränkung zwischen den beiden Hauptteilen der Rollenkupplung möglich ist. In diesem Falle ist es zweckmäßig, den Rollkörper 22 in Richung ihrer Umdrehungsachse verschiebbar zu machen, d.h. radial in Bezug auf die Abtriebswelle 2. Man macht dies am besten dadurch, daß man den Lagerzapfen 32 begrenzt verschiebbar in der Abtriebswelle 2 lagert. Dies ist jedoch hier im einzelnen nicht dargestellt.

Die Rollstäbe können massiv oder hohl ausgeführt werden. Der genannte Käfig aus Hülse 10, Deckel 11 und Kreisscheibe 12 kann als Gehäuse für eine Fettschmierung oder für einen Fettvorrat bzw. ein anderes Schmier-, Kühl- oder Dämpfungsmedium ausgenutzt werden.

Es versteht sich, daß jedes der beiden genannten Hauptteile den Eingang oder den Ausgang der Rollenkupplung bilden kann. Demgemäß ist die dem einen Hauptteil zugeordnete Welle entweder die Antriebswelle oder die Abtriebswelle.

## Patentansprüche

1. Rollenkupplung zum Übertragen eines Drehmomentes, mit den folgenden Merkmalen:
1.1 zwei Hauptteile, nämlich einen Antriebsteil mit einer Antriebswelle (1) und einem Abtriebsteil mit einer Abtriebswelle (2), die während des Betriebes relativ zueinander in Achsrichtung verschiebbar sowie bezüglich der Winkel ihrer Längsachsen veränderbar sind;
1.2 das eine Hauptteil trägt Rollkörper (4, 5, 6; 22-25), deren Drehachsen im wesentlichen senkrecht zur Achsrichtung des sie tragenden Hauptteiles verlaufen und über den Umfang dieses Hauptteiles verteilt angeordnet sind, und deren Mantelflächen jeweils als Rollfläche dient;
1.3 das andere Hauptteil weist Führungsbahnen auf, die sich im wesentlichen in Achsrichtung dieses Hauptteiles erstrecken und die dem Führen der Rollkörper (4, 5, 6; 20-25) dienen;
1.4 die Rollflächen der Rollkörper (4, 5, 6; 20-25) sind - in einem achssenkrechten Schnitt gesehen - konkav gestaltet;
gekennzeichnet durch die folgenden Merkmale:
1.5 die Führungsbahnen sind aus zylindrischen Körpern (7, 8, 9) gebildet;
1.6 die zylindrischen Körper (7, 8, 9) sind um ihre eigene Längsachse drehbar gelagert.

2. Rollenkupplung nach Anspruch 1, dadurch gekennzeichnet, daß die zylindrischen Körper (7, 8, 9) kreiszylindrisch sind.

3. Rollenkupplung nach Anspruch 1 oder 2, dadurch gekennzeichnet, daß die zylindrischen Körper (7, 8, 9) austauschbar sind.

4. Rollenkupplung nach einem der Ansprüche 1-3, dadurch gekennzeichnet, daß jeweils ein zylindrischer Körper (7, 8, 9) zwischen zwei ihm benachbarten Rollkörpern (21, 22; 23, 24; 25, 20) führend eingespannt ist.

5. Rollenkupplung nach einem der Ansprüche 1-4, gekennzeichnet durch die folgenden Merkmale:
5.1 der Krümmungsradius der Laufflächen der Rollkörper (4, 5, 6; 20-25) ist größer als der Krümmungsradius der zylindrischen Körper (7, 8, 9);
5.2 die Rollkörper (4, 5, 6; 20-25) sind in Bezug auf das sie tragende Hauptteil radial verschiebbar.

## Claims

1. A roller coupling for transferring a torque with the following features:
1.1 two main parts, namely a driving member with a driving shaft (1) and a driven member with a driven shaft (2), which during operation are movable relative to one another in an axial direction and can be adjusted with respect to the angles of their longitudinal axes;
1.2 one main part supports rolling bodies (4, 5, 6; 22-25), the rotational axes of which are essentially perpendicular to the axial direction of the main part supporting them and are arranged distributed about the perimeter of this main part, and the circumferential surfaces of which each function as a rolling surface;
1.3 the other main part has guideways which basically extend in the axial direction of this main part and serve to guide the rolling bodies (4, 5, 6; 20-25);
1.4 the rolling surfaces of the rolling bodies (4, 5, 6; 20-25) are concave - viewed in an axially perpendicular section; characterized by the following features:
1.5 the guideways are cylindrical bodies (7, 8, 9);
1.6 the cylindrical bodies (7, 8, 9) are rotatably mounted about their own longitudinal axis.

2. The roller coupling according to claim 1, characterized in that the cylindrical bodies (7, 8, 9) are circular cylindrical.

3. The roller coupling according to claim 1 or 2, characterized in that the cylindrical bodies (7, 8, 9) are replaceable.

4. The roller coupling according to one of claims 1-3, characterized in that each cylindrical body (7, 8, 9) is guidingly held between two neighbouring rolling bodies (21, 22; 23, 24; 25, 20).

5. The roller coupling according to one of claims 1-4, characterized by the following features:
5.1 the radius of curvature of the working surfaces of the rolling bodies (4, 5, 6; 20-25) is greater that the radius of curvature of the cylindrical bodies (7, 8, 9);
5.2 the rolling bodies (4, 5, 6; 20-25) are radially movable in relation to the main part supporting them.

## Revendications

1. Accouplement à rouleaux pour transmettre un couple et ayant les caractéristiques suivantes :
1.1 deux parties principales, à savoir une partie d'entraînement avec un axe d'entraînement (1) et une partie entraînée avec un axe de sortie (2), ces axes coulissant axialement l'un par rapport à l'autre pen-dant le fonctionnement et l'angle formé par leurs axes géométriques est variable ;
1.2 l'une des parties principales porte un organe de roulement (4, 5, 6 ; 22-25) dont les axes de rotation sont essentiellement perpendiculaires à la direction axiale de la partie principale qui les porte et ces organes de roulement sont répartis sur la périphérie de la partie principale et leur surface enveloppe sert chaque fois de surface de roulement ;
1.3 l'autre partie principale comporte des chemins de guidage qui s'étendent essentiellement dans la direction axiale de cette partie principale et servent au guidage des organes de roulement (4, 5, 6 ; 20-25);
1.4 les surfaces de roulement des organes de roulement (4, 5, 6 ; 20-25) sont de forme concave en coupe perpendiculaire à l'axe ; accouplement caractérisé en ce :
1.5 les chemins de guidage sont des organes cylindriques (7, 8, 9) ;
1.6 les organes cylindriques (7, 8, 9) sont rotatifs autour de leur propre axe longitudinal.

2. Accouplement à rouleaux selon la revendication 1, caractérisé en ce que les organes cylindriques (7, 8, 9) sont cylindriques circulaires.

3. Accouplement à rouleaux selon la revendication 1 ou 2, caractérisé en ce que les organes cylindriques (7, 8, 9) sont remplaçables.

4. Accouplement à rouleaux selon l'une des revendications 1-3, caractérisé en ce que chaque fois un organe cylindrique (7, 8, 9) est fixé comme guide entre deux organes de roulement voisins (21, 22 ; 23, 24 ; 25, 20).

5. Accouplement à rouleaux selon l'une des revendications 1 à 4, caractérisé en ce que :
5.1 le rayon de courbure des surfaces de roulement des organes de roulement (4, 5, 6 ; 20-25) est supérieur au rayon de courbure des organes cylindriques (7, 8, 9) ;
5.2 les organes de roulement (4, 5, 6 ; 20-25) sont coulis-sants radialement par rapport à la partie principale qui les porte.
